(19) Europäisches Patentamt
European Patent Office
Office européen des brevets

(11) **EP 2 079 618 B1**

(12) **EUROPÄISCHE PATENTSCHRIFT**

(45) Veröffentlichungstag und Bekanntmachung des Hinweises auf die Patenterteilung:
**08.10.2014  Patentblatt 2014/41**

(51) Int Cl.:
**B62D 15/02** *(2006.01)*          **B60T 8/1755** *(2006.01)*
**B60W 30/12** *(2006.01)*

(21) Anmeldenummer: **07788366.8**

(22) Anmeldetag: **10.08.2007**

(86) Internationale Anmeldenummer:
**PCT/EP2007/058326**

(87) Internationale Veröffentlichungsnummer:
**WO 2008/043591 (17.04.2008 Gazette 2008/16)**

(54) **VERFAHREN FÜR DIE STEUERUNG EINES FAHRERASSISTENZSYSTEMS**

METHOD FOR CONTROLLING A DRIVER ASSIST SYSTEM

PROCÉDÉ POUR COMMANDER UN SYSTÈME D'ASSISTANCE À LA CONDUITE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.10.2006  DE 102006047636**

(43) Veröffentlichungstag der Anmeldung:
**22.07.2009  Patentblatt 2009/30**

(73) Patentinhaber: **Robert Bosch GmbH**
**70442 Stuttgart (DE)**

(72) Erfinder:
• **BUERKLE, Lutz**
**71229 Leonberg (DE)**
• **RENTSCHLER, Tobias**
**75180 Pforzheim (DE)**
• **APP, Thomas**
**75059 Zaisenhausen (DE)**

(56) Entgegenhaltungen:
**EP-A- 1 600 909          EP-A- 1 603 097**
**DE-A1- 10 125 602    DE-A1- 19 906 614**

## Beschreibung

### Stand der Technik

Die Erfindung betrifft ein Verfahren für die Steuerung eines Fahrerassistenzsystems nach dem Oberbegriff des Anspruchs 1.

Ein Fahrerassistenzsystem mit der Funktion Spurverlassenswarnung (LDW = Lane Departure Warning), bei dem der Fahrer eines Kraftfahrzeugs durch akustische, optische, haptische Warnsignale oder beliebige Kombinationen von diesen vor dem Verlassen der Fahrspur gewarnt wird, ist auch für den Bereich der Nutzfahrzeuge inzwischen kommerziell verfügbar. Von großer praktischer Bedeutung ist auch die Funktion LKS (Lane Keeping Support), die den Fahrer durch gerichtete Führungsmomente, also einen Eingriff in das Lenksystem des Fahrzeugs, beim Halten des Fahrzeugs in der Fahrspur, aktiv unterstützt.

Ein Fahrerassistenzsystem mit LKS-Funktion ist aus Naab, Reichert: "Driver Assistance Systems for Lateral and Longitudinal Vehicle Guidance - Heading Control and Active Cruise Support", AVEC 94, bekannt.

Aus DE 101 37 292 A1 ist ein Verfahren zum Betreiben eines Fahrer-Assistenzsystems eines Fahrzeugs, insbesondere Kraftfahrzeugs, mit einer servounterstützten Lenkung, bekannt, das durch folgende Schritte gekennzeichnet ist: Erfassen oder Abschätzung von Umgebungsdaten einer, vorzugsweise momentanen, Verkehrssituation; Erfassen oder Abschätzen von, vorzugsweise momentanen, Bewegungsdaten des Fahrzeugs; Vergleichen der erfassten oder abgeschätzten Umgebungsdaten mit den Bewegungsdaten des Fahrzeugs; Änderung der Unterstützung einer Lenkhandhabe nach Maßgabe des Vergleichs.

Spezielle Ausprägungen der LKS-Funktion, die dem Fahrer nur in einem Randbereich der Fahrspur eine Unterstützung bei der Einhaltung der Fahrspur bieten, sollen mittelfristig in Serie produziert werden. Diese Systeme greifen in einem Korridor um die Mitte der Fahrspur nicht ein. Das bedeutet, dass der Fahrer innerhalb dieses Korridors durch Lenkbewegungen die Führung des Fahrzeugs selbst durchführen muss. Zur Umsetzung der LKS-Funktion umfasst das Fahrerassistenzsystem Mittel für die Erkennung des Verlaufs der Fahrspur. Diese Mittel umfassen üblicherweise Videosensoren für die Erfassung von Fahrspurmarkierungen. Aus zwei im Wesentlichen parallel zueinander ausgerichteten Fahrspurmarkierungen werden der Verlauf der vor dem Fahrzeug liegenden Fahrspur und die Relativposition des Fahrzeugs in Bezug auf diese Fahrspur bestimmt. In Situationen, bei denen keine parallel verlaufenden Fahrspurmarkierungen erfassbar sind, wird die LKS-Funktion vorsorglich deaktiviert. Eine derartige Situation liegt beispielsweise bei einer Spuraufweitung vor. Bei einer solchen Spuraufweitung verbreitert sich die Fahrbahn und die zunächst eine Fahrspur mündet in mehrere Fahrspuren.

### Offenbarung der Erfindung

### Ergänzung zum Stand der Technik

In der EP 1603 097 A2 wird gelehrt, wie im Falle einer Spuraufweitung die durch Spurlinienbeobachtung erkannt wird, eine aktivierte Spurhaltefunktion für eine bestimmte Zeit deaktiviert wird, in der Hoffnung, nach Ende dieser Zeit wieder beide Spurlinien zu erkennen und die Spurhaltefunktion (LKS) wieder sinnvoll einsetzen zu können.

### Technische Aufgabe

Der Erfindung liegt die Aufgabe zugrunde, ein Fahrerassistenzsystem dahingehend zu verbessern, dass die LKS-Funktion auch bei einer Spuraufweitung nutzbar ist.

### Technische Lösung

Die erfindungsgemäße Lösung dieser Aufgabe besteht darin, dass in dem Bereich einer Spuraufweitung von dem Fahrerassistenzsystem eine hypothetische Fahrspur gebildet wird, die eine Startspur mit einer Zielspur verbindet. In dem Bereich der Spuraufweitung wird das Fahrzeug dann so lange auf der hypothetischen Fahrspur geführt, bis das Fahrerassistenzsystem wieder eine reale Fahrspur erkennt. Die Wahl der Zielspur erfolgt dabei auf Basis der Lenkaktivität des Fahrers des Fahrzeugs.

### Vorteilhafte Wirkungen

Die Erfindung ermöglicht die Erkennung von Fahrspuren und die Nutzung der LKS-Funktion auch bei einer komplexen Verkehrssituation, wie insbesondere einer Spuraufweitung, bei der eine Fahrspur in mehrere Fahrspuren übergeht. Diese Situation ist häufig auf der Autobahn und auf Landstraßen anzutreffen. In dem Aufweitungsbereich wird der Richtungsverkehr zunächst nur auf einer einzigen Fahrspur geführt. Am Anfang der Spuraufweitung verzweigt die einzige, im Folgenden auch als Startspur bezeichnete Fahrspur in mehrere, im Folgenden auch als Zielspuren bezeichnete Fahrspuren. Der Kern der Erfindung besteht darin, dass durch Detektion und Analyse des Lenkverhaltens des Fahrers (erkennbar durch Gierbewegung, Lenkradwinkel des Fahrzeugs) eine hypothetische Fahrspur generiert wird, auf der die LKS-Funktion ausgeführt werden kann. Die hypothetische Fahrspur wird durch Beobachtung von nur einer Fahrspurmarkierung gebildet. Das Fahrzeug wird solange auf dieser hypothetischen Fahrspur geführt, bis wieder zwei im Wesentlichen parallel zueinander verlaufende Fahrspurmarkierungen gefunden werden, die eine reale Fahrspur begrenzen. Durch einen sanften Übergang von der hypothetischen Fahrspur in die vorliegende reale Fahrspur bemerkt der Fahrer den Übergang kaum.

Es entsteht somit ein komfortables Führungsverhalten und eine durchgängige Nutzbarkeit der LKS-Funktion auch bei einer komplexen Fahrspursituation, wie beispielsweise einer Spuraufweitung.

Weitere Vorteile ergeben sich aus den Unteransprüchen und der Beschreibung.

Kurze Beschreibung der Zeichnungen

Ausführungsformen der Erfindung werden nachfolgend unter Bezug auf die Zeichnung näher erläutert. Dabei zeigt

Figur 1     ein Blockdiagramm eines Fahrerassistenzsystems;

Figur 2     eine Aufsicht auf eine Fahrbahn mit Fahrspurmarkierungen;

Figur 3     eine Aufsicht auf einen Verkehrsraum mit einer Fahrspuraufweitung;

Figur 4     ein Blockdiagramm eines Funktionsmoduls;

Figur 5     eine Aufsicht auf einen Verkehrsraum mit einer Spuraufweitung.

Ausführungsformen der Erfindung

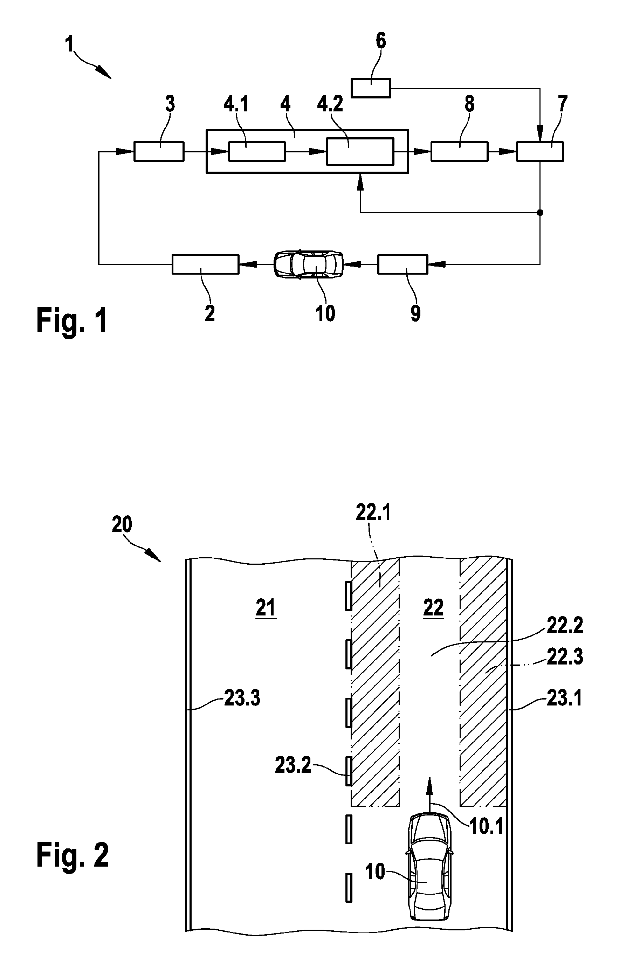

Ausführungsformen der Erfindung werden im Folgenden unter Bezug auf die Zeichnung erläutert. Ein Blockschaltbild eines erfindungsgemäß ausgestalteten Fahrerassistenzsystems 1 eines Fahrzeugs 10 mit LKS-Funktion ist in Figur 1 dargestellt. Das Fahrerassistenzsystem 1 umfasst mindestens ein in Fahrtrichtung nach vorn gerichtetes Sensorsystem 2 für die Spurerkennung. Hierbei handelt es sich beispielsweise um eine Videokamera mit einem Bildsensor in CMOS- oder CCD-Technologie. Der Block 6 repräsentiert den Fahrer des Fahrzeugs 10, der mit dem Lenkrad 7 die Lenkung 9 des Fahrzeugs 10 betätigt. In dem Steuergerät 4 des Fahrerassistenzsystems 1 ist eine LKS-Funktion 4.2 implementiert, die über einen Lenkaktor 8 die Lenkung des Fahrzeugs mit einem Systemmoment beaufschlagt. Der LKS-Funktion 4.2 ist ein LKS-Regler 4.1 vorgeschaltet, der mit einem Funktionsmodul 3 verbunden ist. Das Funktionsmodul 3 stellt, wie unten noch beschrieben, eine hypothetische Fahrspur zur Verfügung, die eine Aktivierung der LKS-Funktion auch dann noch ermöglicht, wenn mangels geeigneter Fahrspurmarkierungen eine reale Fahrspur für das Fahrerassistenzsystem 1 nicht mehr erkennbar ist.

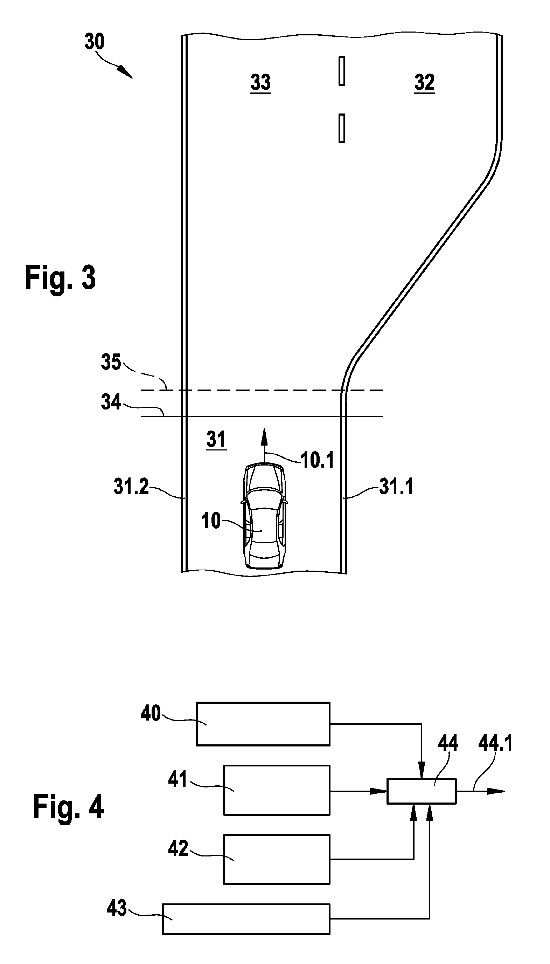

Das in Figur 1 dargestellte Fahrerassistenzsystem 1 mit LKS-Funktion führt das Fahrzeug 10 innerhalb der Fahrbahnmarkierungen einer Fahrspur, wobei in der Mitte der Fahrspur eine Zone ohne Systemeingriff durch das Fahrerassistenzsystem 1 vorgesehen ist. Dies wird im Folgenden unter Bezug auf Figur 2 erläutert, die schematisch einen Verkehrsraum 20 mit zwei Fahrspuren 21, 22 darstellt. Die Fahrspuren 21, 22 sind durch Fahrspurmarkierungen 23.1, 23.2, 23.3 begrenzt. Das mit dem Fahrerassistenzsystem 1 ausgestattete Fahrzeug 10 befährt die Fahrspur 22. Der mittlere Bereich 22.2 der Fahrspur 22 ist eine Zone ohne Systemeingriff, in der also die LKS-Funktion des Fahrerassistenzsystems nicht aktiv wird und der Fahrer das Fahrzeug 10 selbst führt. In den sich anschließenden äußeren Bereichen 22.1, 22.3 der Fahrspur 22 ist dagegen die LKS-Funktion des Fahrerassistenzsystems 1 aktiv. Das heißt, dass hier das Fahrerassistenzsystem 1 beispielsweise einen Lenkeingriff für die Querführung des Fahrzeugs 10 durchführt, um das Fahrzeug innerhalb der Fahrspur 22 zu halten. Die Eingriffe des Fahrerassistenzsystems 1 werden auf Basis der Fahrspurmitte durchgeführt, die die Solltrajektorie für die LKS-Funktion darstellt. Bei einem herkömmlichen Fahrerassistenzsystem mit LKS-Funktion wird die LKS-Funktion deaktiviert, sobald das Fahrerassistenzsystem keine im Wesentlichen parallel verlaufenden Fahrspurmarkierungen mehr erkennen kann. Dies ist insbesondere bei einer Spuraufweitung der Fall, bei der eine Fahrspur in mehrere anschließende Fahrspuren übergeht. Eine solche Verkehrssituation ist häufig auf mehrspurigen Schnellstraßen anzutreffen. Diese Situation ist beispielhaft in Figur 3 dargestellt, die einen Verkehrsraum 30 zeigt. Eine von Fahrspurmarkierungen 31.1, 31.2 begrenzte Fahrbahn 31 weitet sich auf und geht in zwei anschließende Fahrspuren 32, 33 über. Das Fahrzeug 10 befährt zunächst die Fahrspur 31 in Richtung des Pfeils 10.1 und gelangt nach Überfahren der Begrenzungslinie 34 in einen Aufweitungsbereich, in dem die eine Fahrspur 31 in zwei Fahrspuren 32, 33 übergeht. Etwa ab einer zweiten Begrenzungslinie 35 würde bei einem herkömmlichen Fahrerassistenzsystem mit LKS-Funktion die LKS-Funktion deaktiviert, da das Fahrerassistenzsystem keine parallel verlaufenden Fahrspurmarkierungen mehr erkennen kann. Die Erfindung ermöglicht nun, in vorteilhafter Weise, auch bei einer derartigen Verkehrssituation die Aufrechterhaltung der LKS-Funktion. Bei dem Überfahren der Begrenzungslinie 34 erkennt das Sensorsystem 2 des Fahrerassistenzsystems 1, dass offensichtlich mit einer Spuraufweitung zu rechnen ist, da die Parallelität der Fahrspurmarkierungen 31.1, 31.2 verloren geht. Das Fahrerassistenzsystem 1 beobachtet nun in einem kurzen Zeitraum $t_1$ die Lenkbewegungen des Fahrers und die daraus resultierende Gierbewegung des Fahrzeugs 10. Weiterhin wird das statistische Moment erster Ordnung über eine oder beide der genannten Größen gebildet:

$$(1) \qquad \overline{\delta} = \frac{1}{n} \sum_{i=0}^{n} \delta_{-i^* t_{samp}}$$

$$(2) \qquad n = gerun\det\left(\frac{t_1}{t_{samp}}\right)$$

$$(3) \qquad \overline{\dot\Psi} = \frac{1}{n}\sum_{i=0}^{n}\dot\Psi_{-i^*t_{samp}}$$

Darin bedeuten:

$t_{samp}$ = Abtastzeit des Fahrerassistenzsystems;

$\delta$ = Lenkradwinkel;

$\dot\psi$ = Gierrate.

Auf Basis dieser Werte wird die Entscheidung getroffen, in welcher Zielspur der Fahrer fahren möchte. Die Lage der zukünftigen Zielspur ist hier dem Fahrerassistenzsystem noch nicht bekannt. Aus der Krümmung des schon überfahrenen Bereichs der Fahrspur werden dann eine Referenzgierrate $\dot\Psi_{Ref}$ und/oder ein Referenzlenkwinkel $\delta_{Ref}$ bestimmt. Die Entscheidung über die Lage der von dem Fahrer angestrebten Zielspur wird dann nach folgenden Regeln getroffen. Beispielhaft liegt hier die in Figur 3 dargestellte Fahrspursituation zugrunde. Es lassen sich folgende Fälle unterscheiden:

$$(4) \qquad \text{Fall 1:} \qquad \dot\Psi > \dot\Psi_{Ref}$$

Dies bedeutet, dass der Fahrer auf einer neuen Fahrspur fahren möchte, die links in Bezug auf die ursprüngliche Spur 31 liegt.

$$(5) \qquad \text{Fall 2:} \qquad \dot\Psi < \dot\Psi_{Ref}$$

Dies bedeutet, dass der Fahrer auf einer neuen Fahrspur fahren möchte, die rechts in Bezug auf die ursprüngliche Spur 31 liegt.

$$(6) \qquad \text{Fall 3:} \qquad \dot\Psi = \dot\Psi_{Ref}$$

Dies bedeutet, dass der Fahrer auf einer Fahrspur fahren möchte, deren Verlauf der ursprünglichen Spur 31 entspricht.

In einer vorteilhaften Ausführungsvariante der Erfindung kann der Vergleich in allen drei genannten Fällen auch in einem Werteintervall um $\dot\Psi_{Ref}$ durchgeführt

werden, so dass der exakte Wert nicht unbedingt getroffen werden muss. Weiterhin kann vorteilhaft noch eine Plausibilitätsprüfung mit dem Lenkradmoment durchgeführt werden.

Das Lenkradmoment ist die Kraft, die der Fahrer auf das Lenkrad im Sinne einer Drehbewegung des Lenkrads aufbringt. Lenkt der Fahrer zum Beispiel nach rechts, so muss er ein negatives Lenkradmoment aufbringen und dieses konstant halten, damit das Fahrzeug die gewünschte Rechtskurve fährt. Analog muss ein positives Lenkradmoment für eine Linkskurve aufgebracht werden. Durch Auswertung des Vorzeichens des Lenkradmoments oder noch besser, durch Auswertung des Vorzeichens des Lenkradmoments und des Absolutbetrags des Lenkradmoments, der mit einem vorgebbaren Schwellwert verglichen werden kann, ist somit eine Überprüfung oder Plausibilisierung der aus der Gierrate abgeleiteten Richtungsentscheidung möglich. Somit kann überprüft werden, ob der Fahrer wirklich in die aus der Gierrate abgeleitete Richtung lenken will.

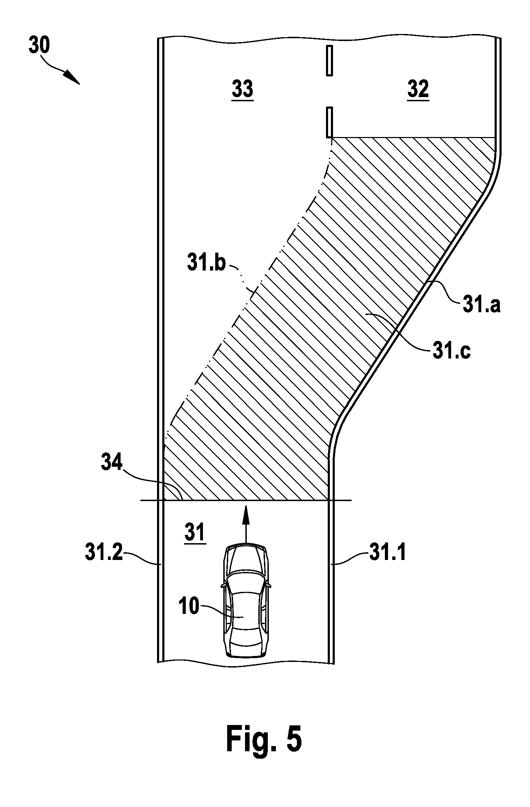

Alternativ kann die Entscheidung auch in Abhängigkeit von dem Lenkradwinkel getroffen werden, je nachdem welcher Sensorwert die bessere Ausgangsbasis darstellt. Hierdurch können Sensordrift und Sensoroffset berücksichtigt werden. In einer weiteren Ausführungsvariante kann die genannte Entscheidung auch in Abhängigkeit von der Gierrate und zugleich in Abhängigkeit von dem Lenkradwinkel getroffen werden. Ein Blockdiagramm für die Erläuterung der Entscheidungsstruktur ist in Figur 4 dargestellt. Das Funktionsmodul 44 ist für die Auswahl der Entscheidungskriterien und die Entscheidung zuständig, die an dem Ausgang 44.1 für die Weiterleitung an einen Entscheider bereitgestellt wird. Die Entscheidung betrifft die Lage der in Figur 5 dargestellten Spurreferenzlinie 31a, die die neu eingeschlagene Fahrspur 32 begrenzt. Als Entscheidungskriterien werden dem Funktionsmodul 44 eingangsseitig das Moment erster Ordnung über den Lenkradwinkel (Funktionsmodul 42), das Moment erster Ordnung über die Gierrate (Funktionsmodul 41) und das Lenkradmoment (Funktionsmodul 40) bereitgestellt. Weiterhin werden dem Funktionsmodul 44 Referenzwerte der Gierrate und des Lenkradwinkels zugeleitet, die durch das Funktionsmodul 43 ermittelt werden. Die Berechnung dieser Referenzwerte basiert auf einem Fahrzeugmodell. Die Referenzwerte werden nach folgenden Beziehungen ermittelt:

$$(8) \qquad \dot\Psi_{Ref} = v^* \kappa_{Road}$$

$$(9) \qquad \delta_{Ref} = l^* \kappa_{Road} + \alpha_V - \alpha_H \ .$$

Darin bedeuten:

V = Geschwindigkeit des Fahrzeugs,
l = Achsabstand;
$\alpha_V$ = Schräglaufwinkel Vorderrad;
$\alpha_H$ = Schräglaufwinkel Hinterrad.

Liegt eine Entscheidung vor, dann wird eine hypothetische Spur in dem Modul A erzeugt. Der Entscheider übermittelt an dieses Funktionsmodul die Information, welche Linie als Spurreferenzlinie ausgewählt und zur Bildung einer hypothetischen Spur genutzt werden soll. Als Ergebnis der Entscheidung kommen folgende Varianten in Betracht:

Fall 1: eine links vom Fahrzeug liegende Linie wird als Referenzlinie gewertet;

Fall 2: eine rechts vom Fahrzeug liegende Linie wird als Referenzlinie gewertet;

Fall 3: eine rechts oder links von dem Fahrzeug liegende Linie mit näherungsweise identischer Krümmung wie die ursprüngliche Fahrspur (Fahrspur 31) wird als Referenzlinie gewertet.

Auf Grundlage der ausgewählten Referenzlinie wird dann die hypothetische zukünftige Fahrspur gebildet. Dabei werden folgende Annahmen zugrunde gelegt. Als Breite der Fahrspur wird eine Standardbreite, beispielsweise ein Wert von 3,6 m angenommen. Alternativ kann auch die Breite der ursprünglichen Fahrspur 31 als Breite der hypothetischen Fahrspur angesetzt werden. Weiterhin wird unterstellt, dass die die hypothetische Fahrspur begrenzende zweite Linie im Wesentlichen parallel zu der Referenzlinie verläuft, also ihre Krümmungen im Wesentlichen identisch sind. Die gesamten Relativgrößen, wie Querablage des Fahrzeugs, Differenzwinkel, werden auf Basis dieser so ermittelten hypothetischen Spur gebildet. Somit steht die gesamte Funktionalität der LKS-Funktion auch bei dieser komplexen eine Spuraufweitung umfassenden Fahrspursituation zur Verfügung. Werden parallel verlaufende Linien einer Zielspur detektiert, dann erfolgt ein stetiger Übergang zwischen der hypothetischen und der realen Fahrspur. Dieser Ablauf wird im Folgenden anhand von Figur 5 erläutert. Figur 5 zeigt eine Aufsicht auf einen Verkehrsraum 30 mit einer Spuraufweitung. Das heißt, die Spur 31 weitet sich in zwei Spuren 32 und 33 auf. Die Spur 31 ist von den im Wesentlichen parallel verlaufenden Fahrspurmarkierungen 31.1, 31.2 begrenzt. Kurz nach Überschreiten der Begrenzungslinie 34 würde bei einem herkömmlichen Fahrerassistenzsystem die LKS-Funktion deaktiviert, da infolge der Spuraufweitung die Parallelität der Fahrspurmarkierungen 31.1, 31.2 verloren gegangen ist. Erfindungsgemäß erzeugt das Fahrerassistenzsystem 1 nun auf Basis des Lenkradwinkels und/oder auf Basis der Gierrate eine Referenzlinie 31.a, die eine erste Fahrspurmarkierung für eine hypothetische Fahrspur 31.c darstellt. Unter Berücksichtigung der oben schon beschriebenen Fahrspurhypothese, das heißt unter Annahme einer Standardbreite der Fahrspur oder unter Fortschreibung der Breite der verlassenen Fahrspur 31, wird die zweite Fahrspurmarkierung 31.b gebildet, die die hypothetische Fahrspur 31.c begrenzt. Nach Überfahren der Begrenzungslinie 34 bewegt sich das Fahrzeug 10 somit auf der hypothetischen Fahrspur 31.c fort, bis diese wieder in die als Zielspur vorgesehene reale Fahrspur 32 mündet. Da somit auch in dem Bereich der Spuraufweitung eine Fahrspur 31.c (hypothetische Fahrspur) mit definierten Fahrspurmarkierungen vorhanden ist, kann die LKS-Funktion des Fahrerassistenzsystems 1 auch in dem Bereich der Spuraufweitung genutzt werden.

**Patentansprüche**

1. Verfahren für die Steuerung eines Fahrerassistenzsystems (1) mit LKS-Funktion eines Fahrzeugs (10), **dadurch gekennzeichnet, dass** in dem Bereich einer Spuraufweitung von dem Fahrerassistenzsystem (1) eine hypothetische Fahrspur (31.c) gebildet wird, die eine Startspur (31) mit einer Zielspur (32, 33) verbindet.

2. Verfahren nach Anspruch 1, **dadurch gekennzeichnet, dass** die hypothetische Fahrspur durch Beobachtung von nur einer Fahrspurmarkierung gebildet wird.

3. Verfahren nach einem der vorhergehenden Ansprüche, **dadurch gekennzeichnet, dass** ein stetiger Übergang zwischen der hypothetischen und der Zielspur erfolgt.

4. Verfahren nach einem der vorhergehenden Ansprüche, **dadurch gekennzeichnet, dass** in dem Bereich der Spuraufweitung das Fahrzeug (10) von dem Fahrerassistenzsystem (1) auf der hypothetischen Fahrspur geführt wird.

5. Verfahren nach einem der vorhergehenden Ansprüche, **dadurch gekennzeichnet, dass** für die Festlegung einer ersten Fahrspurmarkierung (31.a) der hypothetischen Fahrspur (31.c) ein Referenzlenkradwinkel des Fahrzeugs (10) ausgewertet wird.

6. Verfahren nach einem der vorhergehenden Ansprüche, **dadurch gekennzeichnet, dass** für die Festlegung einer ersten Fahrspurmarkierung (31.a) der hypothetischen Fahrspur (31.c) eine Referenzgierrate des Fahrzeugs (10) ausgewertet wird.

7. Verfahren nach einem der vorhergehenden Ansprüche, **dadurch gekennzeichnet, dass** für die Festlegung einer ersten Fahrspurmarkierung (31.a) der hypothetischen Fahrspur (31.c) ein Referenzlenkradwinkel des Fahrzeugs (10) und eine Referenzgierrate des Fahrzeugs (10) ausgewertet werden.

8. Verfahren nach einem der Ansprüche, 5 bis 7 **dadurch gekennzeichnet, dass** eine die hypothetische Fahrspur (31.c) begrenzende zweite Fahrspurmarkierung (31.b) unter Fortschreibung der Breite der Startspur (31) festgelegt wird.

9. Verfahren nach einem der Ansprüche, 5 bis 7 **dadurch gekennzeichnet, dass** eine die hypothetische Fahrspur (31.c) begrenzende zweite Fahrspurmarkierung (31.b) unter Annahme einer Standardbreite der Fahrspur festgelegt wird.

10. Verfahren nach einem der Ansprüche, 5 oder 7, **dadurch gekennzeichnet, dass** der Referenzlenkradwinkel nach folgender Beziehung gebildet wird:

$$\delta_{Ref} = l^* \kappa_{Road} + \alpha_V - \alpha_H \,,$$

Worin bedeuten:

V = Geschwindigkeit des Fahrzeugs,
l = Achsabstand;
$\alpha_V$ = Schräglaufwinkel Vorderrad;
$\alpha_H$ = Schräglaufwinkel Hinterrad.

11. Verfahren nach einem der Ansprüche, 6 oder 7, **dadurch gekennzeichnet, dass** die Referenzgierrate nach folgender Beziehung gebildet wird:

$$\dot{\Psi}_{Ref} = v^* \kappa_{Road}$$

Worin bedeuten:

$K_{Road}$ = Krümmung der Fahrspur.

12. Verfahren nach einem der vorhergehenden Ansprüche, **dadurch gekennzeichnet, dass** die Lenkbewegung des Fahrzeugs (10) erfasst wird, und dass aus der Lenkbewegung ein statistischer Wert des Lenkradwinkels nach der folgenden Beziehung gebildet wird:

$$\bar{\delta} = \frac{1}{n} \sum_{i=0}^{n} \delta_{-i^* t_{sam}} \,,$$

mit $n = gerun\det(\frac{t_1}{t_{samp}})$ ,

worin bedeuten:

$t_{samp}$ = Abtastzeit des Fahrerassistenzsystems,
$\delta$ = Lenkradwinkel.

13. Verfahren nach einem der vorhergehenden Ansprüche, **dadurch gekennzeichnet, dass** die Querbewegung des Fahrzeugs (10) erfasst wird, und dass aus der Querbewegung ein statistischer Wert der Gierrate nach der folgenden Beziehung gebildet wird:

$$\bar{\dot{\Psi}} = \frac{1}{n} \sum_{i=0}^{n} \dot{\Psi}_{-i^* t_{samp}} \,,$$

mit $n = gerun\det(\frac{t_1}{t_{samp}})$ ,

Worin bedeuten:

$t_{samp}$ = Abtastzeit des Fahrerassistenzsystems;
$\dot{\Psi}$ = Gierrate.

14. Verfahren nach einem der vorhergehenden Ansprüche, **dadurch gekennzeichnet, dass** eine als Zielspur ausgewählte Fahrspur (32, 33) aus folgenden Fallgestaltungen bestimmt wird:

$$\text{Fall 1: } \dot{\Psi} > \dot{\Psi}_{Ref} \,,$$

$$\text{Fall 2: } \dot{\Psi} < \dot{\Psi}_{Ref} \,,$$

$$\text{Fall 3: } \dot{\Psi} = \dot{\Psi}_{Ref} \,.$$

15. Verfahren nach einem der vorhergehenden Ansprüche, **dadurch gekennzeichnet, dass** die Richtungsentscheidung für die Auswahl einer Zielspur durch das Lenkradmoment plausibilisiert werden kann.

**Claims**

1. Method for controlling a driver assist system (1) with an LKS function of a vehicle (10), **characterized in that** in the region of a widening of the lane a hypothetical lane (31.c) which connects a starting lane (31) to a target lane (32, 33) is formed by the driver assist system (1).

2. Method according to Claim 1, **characterized in that** the hypothetical lane is formed by observing just one lane marking.

3. Method according to one of the preceding claims, **characterized in that** a continuous transition occurs between the hypothetical lane and the target lane.

4. Method according to one of the preceding claims, **characterized in that** in the region of the widening of the lane the vehicle (10) is guided on the hypothetical lane by the driver assist system (1).

5. Method according to one of the preceding claims, **characterized in that** in order to define a first lane marking (31.a) of the hypothetical lane (31.c) a reference steering wheel angle of the vehicle (10) is evaluated.

6. Method according to one of the preceding claims, **characterized in that** in order to define a first lane marking (31.a) of the hypothetical lane (31.c) a reference yaw rate of the vehicle (10) is evaluated.

7. Method according to one of the preceding claims, **characterized in that** in order to define a first lane marking (31.a) of the hypothetical lane (31.c) a reference steering wheel angle of the vehicle (10) and a reference yaw rate of the vehicle (10) are evaluated.

8. Method according to one of Claims 5 to 7, **characterized in that** a second lane marking (31.b) which bounds the hypothetical lane (31.c) is defined by extending the width of the starting lane (31).

9. Method according to one of Claims 5 to 7, **characterized in that** a second lane marking (31.b) which bounds the hypothetical lane (31.c) is defined assuming a standard width of the lane.

10. Method according to Claim 5 or 7, **characterized in that** the reference steering wheel angle is formed according to the following relationship:

$$\delta_{Ref} = l^* \kappa_{Road} + \alpha_V - \alpha_H \, ,$$

where:

V = velocity of the vehicle;
l = wheel base;
$\alpha_V$ = slip angle front wheel;
$\alpha_H$ = slip angle rear wheel.

11. Method according to Claim 6 or 7, **characterized in that** the reference yaw rate is formed according to the following relationship:

$$\dot{\Psi}_{Ref} = v^* \kappa_{Road}$$

where:

$\kappa_{Road}$ = curvature of the lane.

12. Method according to one of the preceding claims, **characterized in that** the steering movement of the vehicle (10) is detected, and **in that** a statistical value of the steering wheel angle is formed from the steering movement according to the following relationship:

$$\bar{\delta} = \frac{1}{n} \sum_{i=0}^{n} \delta_{-i \cdot t_{samp}} \, ,$$

where $$n = \text{rounded} \left( \frac{t_1}{t_{samp}} \right) \, ,$$

where:

$t_{samp}$ = sample time of the driver assist system, and
$\delta$ = steering wheel angle.

13. Method according to one of the preceding claims, **characterized in that** the transverse movement of the vehicle (10) is detected, and **in that** a statistical value of the yaw rate is formed from the transverse movement according to the following relationship:

$$\bar{\dot{\Psi}} = \frac{1}{n} \sum_{i=0}^{n} \dot{\Psi}_{-i \cdot t_{samp}} \, ,$$

where

$$n = \text{rounded} \left(\frac{t_1}{t_{samp}}\right),$$

where:

$t_{samp}$ = sampling time of the driver assist system;
$\dot{\Psi}$ = yaw rate.

**14.** Method according to one of the preceding claims, **characterized in that** a lane (32, 33) which is selected as a target lane is determined from the following case configurations:

$$\text{case 1:} \quad \dot{\Psi} > \dot{\Psi}_{Ref},$$

$$\text{case 2:} \quad \dot{\Psi} < \dot{\Psi}_{Ref},$$

$$\text{case 3:} \quad \dot{\Psi} = \dot{\Psi}_{Ref}.$$

**15.** Method according to one of the preceding claims, **characterized in that** the plausibility of the decision regarding the direction for the selection of a target lane can be determined by means of the steering wheel torque.

## Revendications

**1.** Procédé pour la commande d'un système d'assistance au conducteur (1) avec fonction LKS d'un véhicule (10), **caractérisé en ce que** dans la zone d'un élargissement de la voie, une voie de circulation hypothétique (31.c) est formée par le système d'assistance au conducteur (1), laquelle relie une voie de départ (31) avec une voie de destination (32, 33).

**2.** Procédé selon la revendication 1, **caractérisé en ce que** la voie de circulation hypothétique est formée en observant un seul marquage de voie de circulation.

**3.** Procédé selon l'une des revendications précédentes, **caractérisé en ce qu'**une transition continue a lieu entre les voies hypothétique et de destination.

**4.** Procédé selon l'une des revendications précédentes, **caractérisé en ce que** dans la zone de l'élargissement de la voie, le véhicule (10) est guidé sur la voie de circulation hypothétique par le système d'assistance au conducteur (1).

**5.** Procédé selon l'une des revendications précédentes, **caractérisé en ce qu'**un angle de volant de direction de référence du véhicule (10) est interprété pour la définition d'un premier marquage de voie de circulation (31.a) de la voie de circulation hypothétique (31.c).

**6.** Procédé selon l'une des revendications précédentes, **caractérisé en ce qu'**un taux de lacet de référence du véhicule (10) est interprété pour la définition d'un premier marquage de voie de circulation (31.a) de la voie de circulation hypothétique (31.c).

**7.** Procédé selon l'une des revendications précédentes, **caractérisé en ce qu'**un angle de volant de direction de référence du véhicule (10) et un taux de lacet de référence du véhicule (10) sont interprétés pour la définition d'un premier marquage de voie de circulation (31.a) de la voie de circulation hypothétique (31.c).

**8.** Procédé selon l'une des revendications 5 à 7, **caractérisé en ce qu'**un deuxième marquage de voie de circulation (31.b) délimitant la voie de circulation hypothétique (31.c) est défini en actualisant la largeur de la voie de départ (31).

**9.** Procédé selon l'une des revendications 5 à 7, **caractérisé en ce qu'**un deuxième marquage de voie de circulation (31.b) délimitant la voie de circulation hypothétique (31.c) est défini en supposant une largeur standard de la voie de circulation.

**10.** Procédé selon l'une des revendications 5 ou 7, **caractérisé en ce que** l'angle de volant de direction de référence est calculé d'après l'équation suivante :

$$\delta_{Ref} = l*K_{Road} + \alpha_V - \alpha_H,$$

où :

V = vitesse du véhicule,
l = empattement ;
$\alpha_V$ = angle de dérive des roues avant ;
$\alpha_H$ = angle de dérive des roues arrière.

**11.** Procédé selon l'une des revendications 6 ou 7, **caractérisé en ce que** le taux de lacet de référence est calculé d'après l'équation suivante :

$$\dot{\Psi}_{Ref} = v*K_{Road}$$

où :

K$_{Road}$ = courbure de la voie de circulation.

**12.** Procédé selon l'une des revendications précédentes, **caractérisé en ce que** le mouvement de direction du véhicule (10) est détecté,
et **en ce qu'**une valeur statistique de l'angle du volant de direction est calculée à partir du mouvement de direction d'après l'équation suivante :

$$\bar{\delta} = \frac{1}{n} \sum_{i=0}^{n} \delta_{-i \cdot t_{samp}},$$

avec $n = \text{arrondi } (\frac{t_s}{t_{samp}})$,

où :

t$_{samp}$ = temps d'échantillonnage du système d'assistance au conducteur,
δ = angle du volant de direction.

**13.** Procédé selon l'une des revendications précédentes, **caractérisé en ce que** le mouvement transversal du véhicule (10) est détecté,
et **en ce qu'**une valeur statistique du taux de lacet est calculée à partir du mouvement transversal d'après l'équation suivante :

$$\bar{\dot{\Psi}} = \frac{1}{n} \sum_{i=0}^{n} \dot{\Psi}_{-i \cdot t_{samp}},$$

avec $n = \text{arrondi } (\frac{t_s}{t_{samp}})$,

où :

t$_{samp}$ = temps d'échantillonnage du système d'assistance au conducteur,
$\dot{\Psi}$ = taux de lacet.

**14.** Procédé selon l'une des revendications précédentes, **caractérisé en ce qu'**une voie de circulation (32, 33) sélectionnée en tant que voie de destination est définie à partir des hypothèses suivantes :

$$\text{Cas 1 : } \dot{\Psi} > \dot{\Psi}_{Ref},$$

$$\text{Cas 2 : } \dot{\Psi} < \dot{\Psi}_{Ref},$$

$$\text{Cas 3 : } \dot{\Psi} = \dot{\Psi}_{Ref}.$$

**15.** Procédé selon l'une des revendications précédentes, **caractérisé en ce que** la plausibilité de la décision de la direction pour la sélection d'une voie de destination peut être vérifiée par le biais du couple du volant de direction.

Fig. 1

Fig. 2

**Fig. 3**

30

33    32

35
34

31

10.1

31.2    31.1

10

**Fig. 4**

40

41

42

43

44  44.1

30

33          32

31.b

31.a

31.c

34

31

31.2          31.1

10

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292 A1
- EP 1603097 A2